# EUROPEAN PATENT SPECIFICATION

(11) **EP 3 091 250 B1**
(45) Date of publication and mention of the grant of the patent: **20.02.2019**
(21) Application number: 16168767.8
(22) Date of filing: 09.05.2016
(51) Int. Cl.: F16G 5/20

(54) **DRIVE BELT**
ANTRIEBSRIEMEN
COURROIE D'ENTRAÎNEMENT

(30) Priority: 08.05.2015 IT MI20150653
(43) Date of publication of application: 09.11.2016
(73) Proprietor: Elatech Srl, 24012 Val Brembilla (BG) (IT)
(72) Inventor: SCAGLIA, Riccardo, 24012 Val Brembilla (BG) (IT)
(74) Representative: Marietti, Andrea

(56) References cited:
- DE-A1- 4 237 996
- DE-B- 1 055 897
- JP-A- 2000 136 847
- JP-A- 2001 152 009
- US-A1- 2009 227 406

## Description

The present invention concerns the field of drive belts.

The drive belts of the known art are generally composed of one or more materials, or mixtures of polymeric materials.

To guarantee a proper transmission of the torque to the belt, the latter has one or more reinforcing elements buried inside the belt itself and arranged longitudinally with respect to the belt, i.e. substantially in parallel to the main development direction of the belt.

Typically, these reinforcing elements are cables arranged inside the belt, which extend lengthwise, i.e. along the main development direction of the belt. The insertion of such supporting elements significantly increases the belt production complexity, times and costs. Moreover, such cables are generally inextensible and limit the belt elasticity.

Examples of belts with reinforcing elements are given in DE1055897, US2009/227406 and JP2000136847.

Object of the present invention is the implementation of a drive belt solving the afore mentioned problems of the known art. In particular, it is an object of the present invention to implement a drive belt simple and quick to manufacture. This and other objects are obtained by a drive belt according to enclosed claims.

In particular, according to an aspect of the present invention, a drive belt has a main direction of development and comprises a plurality of ribs arranged substantially parallel to the main direction of development. The ribs make a series of peaks and troughs, and the belt is made of a single polymeric material, having:
- Hardness comprised between 50 and 98 Sh A, preferably between 75 and 98 Sh A, measured according to respective ISO or DIN standards, such as for example ISO 868 or DIN 53505 standards.
- Stress at 100% elongation (100% Modulus) comprised between 5 and 14 MPa, measured according to the respective ASTM standard, such as the ASTM D3379-79 standard.
- Rebound resilience comprised between 30% and 70%, measured according to the respective DIN standard, in particular the DIN 53512 standard.

Thanks to this, an efficient belt can be manufactured simply.

In particular, despite the absence of reinforcing elements inside the polymeric material, the belt according to the present invention guarantees a tensile strength sufficient to allow the transmission of high forces when, during use, the belt is assembled on two or more pulleys.

Furthermore, a belt according to the present invention can be easily assembled on pulleys with fixed centre-to-centre distance thanks to the particular elasticity of the belt itself, in view of the absence of inextensible reinforcing cables.

Moreover, if any foreign body, for example the operator's fingers, should be interposed between the belt and the pulley, the elasticity of the same belt would allow to prevent, or anyway considerably decrease, damages for such a foreign body.

As it is clear for the field technician, the peaks are the rib points with greatest height, whereas the troughs are the spaces comprised between two successive ribs. According to another aspect of the present invention, the belt is of the endless type. In other words, the belt is preferably an endless belt.

The endless belt implementation, i.e. like a closed-loop belt, allows obtaining a uniform belt, so that a higher strength of the same is guaranteed. The endless belt is, as a matter of fact, free of seams that would weaken the belt itself. In fact, such seams would be subject to high tractive forces that would tend to break the same seams, thus making the belt unusable.

In other words, the tensile strength of the belt would be actually limited due to the seam presence, despite the high strength of the above described polymeric material. An endless belt, i.e. a closed loop belt, is free of such a drawback.

According to another aspect of the present invention, the troughs are defined, in the section view, by reciprocally inclined sides belonging to different ribs.

According to another aspect of the present invention, the material of which the belt is made is an elastomer.

According to another aspect of the present invention, the material of which the belt is made is polyurethane.

According to another aspect of the present invention, the polyurethane comprises a polyol having molecular weight equal to about 2000 and hydroxyl number equal to about 56, and butanediol as crosslinker.

According to another aspect of the present invention, the ratio between the rib height and the belt thickness is between 1:1.2 and 1:4.

According to another aspect of the present invention, the pitch between successive ribs, as measured in a direction perpendicular to the main development direction, is comprised between 1 and 5 mm.

According to another aspect of the present invention, the aforesaid material has stress at 300% elongation (300% Modulus) comprised between 8.6 and 22 MPa, measured according to the respective ASTM standard (for example the ASTM D3379-79 standard).

According to another aspect of the present invention, the aforesaid material has tensile strength between 17 and 32 MPa, measured according to ASTM D3379-79 standard, and elongation at break comprised between 400% and 500%, measured according to ASTM D3379-79 standard.

According to another aspect of the present invention, the aforesaid material has friction coefficient with steel between 0.2 and 0.6.

According to another aspect of the present invention, the troughs comprised between the successive ribs have an angle between 30° and 90°.

An exemplary and not limitative embodiment is now described referring to the appended figures, in which:
- figure 1 is a schematic perspective view of a belt according to the present invention;
- figure 2 is an enlarged sectional view of a belt according to the present invention;
- figure 3 is a perspective view of a belt according to the present invention, assembled on two pulleys;
- figure 4 is a view similar to that of figure 3, with a sectional view of the belt. Referring to the figures, a belt 1 has a main development direction D typically corresponding to the direction along which the belt is moved.

The belt 1 has a plurality of ribs 2 arranged substantially in parallel to the main development direction D.

The ribs 2, seen in the sectional view obtained through a plane perpendicular to the main development direction D, form a series of peaks 2a and troughs 3. Typically, the ribs 2 are shaped as triangles or isosceles trapezium.

As mentioned, similar shapes are known in the art as V-shape (V-belts), due to the form the ribs 2 and the troughs 3 take.

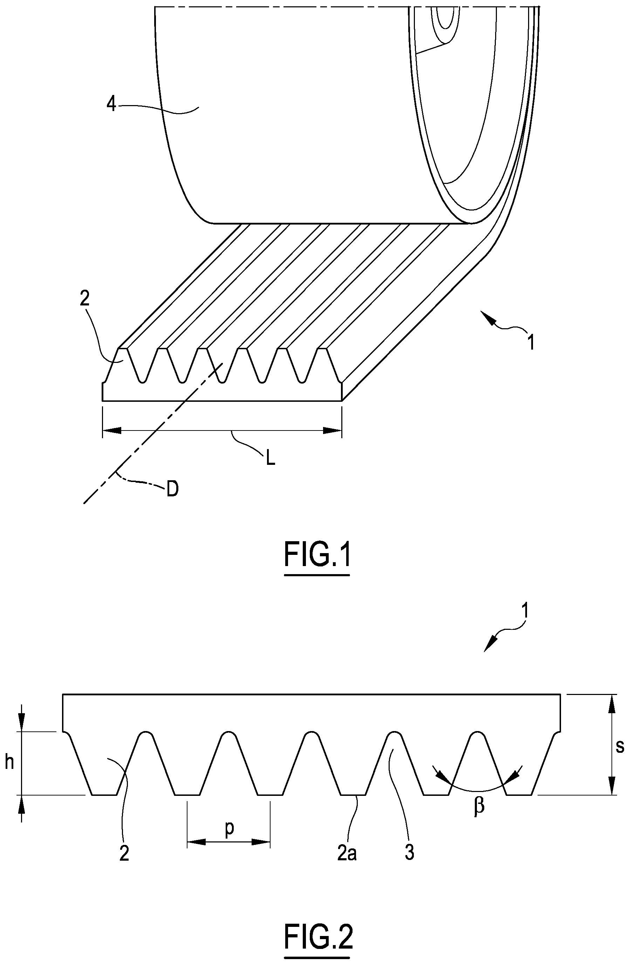

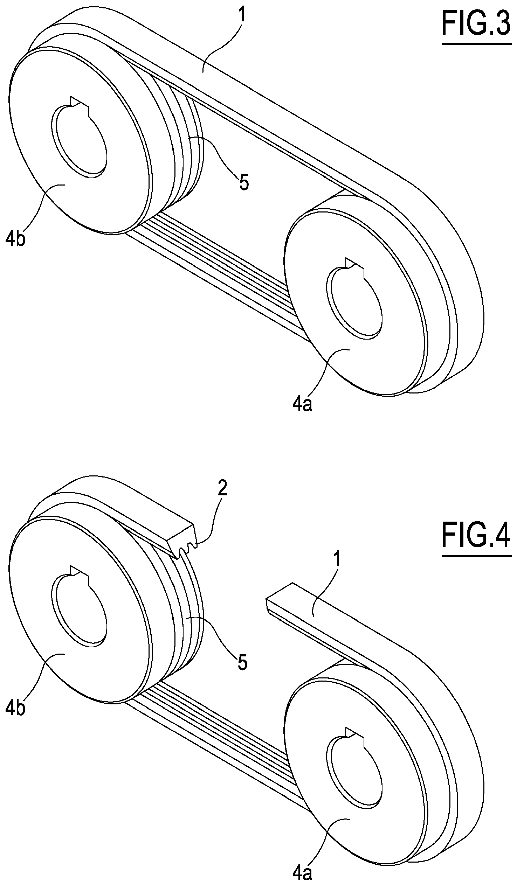

A similar belt can be wound on a pulley 4, 4a, 4b. In a known way, the pulley 4a, 4b can have in turn ribs 5, as visible in the embodiment of figures 3 and 4, fitting inside the troughs 3 of the belt 1, or else it can have a smooth surface contacting the belt 1, as the pulley 4 shown in figure 1.

According to the present invention, the drive belt 1 is made of a single polymeric material. In other words, the composition of the drive belt 1 is substantially uniform, i.e. the composition of the belt 1 is homogeneous. Therefore, there are no reinforcing elements arranged along one of the dimensions and, in particular, along the main development direction D.

According to the present invention, in order to correctly operate the belt, i.e. the latter has the necessary mechanical features also with no reinforcing elements, the belt 1 is made of a material having the following characteristics:
- Hardness comprised between 50 and 98 Sh A, preferably between 75 and 98 Sh A, measured according to respective ISO or DIN standards (for example ISO 868 or DIN 53505 standards);
- Stress at 100% elongation (100% Modulus) comprised between 5 and 14 MPa, measured according to the respective ASTM standard (for example the ASTM D3379-79 standard);
- Rebound resilience comprised between 30% and 70%, measured according to the respective DIN standard (for example the DIN 53512 standard).

As mentioned, the belt 1 is made as an endless belt, i.e. a closed-loop belt. In other words, the belt 1 is made in one piece, whereby it has no seams.

Preferably, the material is an elastomer and, in particular, a polyurethane.

A possible material meeting the afore depicted characteristics is, for example, a polyurethane having a polyol with molecular weight equal to about 2000 and hydroxyl number equal to about 56. Preferably, butanediol acts as crosslinker.

For example, a polyol suitable for the invention is a caprolactone (epsilon-caprolactone) based polyol.

Preferably, the polyol further has viscosity at 40 degrees between 500 and 1500 cP, and specific gravity at 40 degrees between 0.97 and 1.07.

Preferably, the butanediol used as crosslinker has specific gravity at 20 degrees between 1.01 and 1.02.

According to another aspect of the invention, the catalytic medium is consisting of a polyol with molecular weight substantially equal to 1000 and a blocker acid predispersed in butanediol.

For an optimal belt operation, the material used for making the belt preferably has one or more of the following features:
- Stress at 300% elongation (300% Modulus) comprised between 8.6 and 22 MPa, measured according to the respective ASTM standard, for example the ASTM D3379-79 standard;
- Tensile strength between 17 and 32 MPa, measured according to the respective ASTM standard (for example the ASTM D3379-79 standard), with elongation at break comprised between 400% and 500%, measured according to the respective ASTM standard (for example the ASTM D3379-79 standard);
- Friction coefficient with steel between 0.2 and 0.6.

For what concerns the geometry of a belt made of a material according to the present invention, and in particular the geometry of the ribs 2, the pitch p between the successive ribs is preferably comprised between 1 and 5 mm.

In known way, pitch p means the distance between two successive peaks 2a of the ribs 2. In case wherein the ribs 2 have as peak 2a, along their section, a flat line parallel to the width L of the belt 1, the intermediate point of this line is used to measure the pitch p. For example, in this way the pitch of a belt 1 with ribs 2 having trapezium shapes is measured, as shown in figure 2.

The pitch p between the successive ribs 2 can be constant, or it can vary along the width L of the belt 1.

Preferably, the ratio between the height h of the ribs 2 and the thickness S of the belt is comprised between 1:1.2 and 1:4. The thickness S of the belt comprises the ribs 2. According to another aspect, the troughs 3 preferably have an angle β between 30° and 90°.

During the assembly of the belt 1 on the pulleys 4a, 4b, the elasticity of the belt 1, even if limited, can be exploited so that the belt is deformed. More in detail, the belt 1 can be maintained in a deformed condition, i.e. slightly lengthened, so that it can be arranged around the pulleys 4 and then the deformation of the belt 1 can be removed such that the elastic recovery of the latter forces the belt 1 to contact the pulleys 4a, 4b. Such a process is particularly advantageous in case the pulleys 4a, 4b have fixed centre-to-centre distance, i.e. they cannot be moved one with respect to another, as in the embodiment of figure 3.

In use, the rotation of a first pulley 4a, typically driven by a motor, rotates the belt 1, the latter in turn causing the rotation of the second pulley 4b.

## Claims

1. Drive belt having a main direction of development, comprising a plurality of ribs arranged substantially parallel to said main direction of development, wherein said ribs make a series of peaks and troughs, and said belt is made of a single polymeric material, **characterized in that**, there are no reinforcing elements arranged along the said main development direction, said polymeric material having:
- Hardness comprised between 50 and 98 Sh A,
- Stress at 100% elongation (100% Modulus) comprised between 5 and 14 MPa,
- Rebound resilience comprised between 30% and 70%.

2. Drive belt according to claim 1, wherein said belt is of the endless type.

3. Drive belt according to claim 1 or 2, wherein said troughs are defined, in the section view, by reciprocally inclined sides belonging to different ribs.

4. Drive belt according to claim 1, 2 or 3, wherein said material is elastomer.

5. Drive belt according to claim 4, wherein said material is polyurethane.

6. Drive belt according to claim 5, wherein said polyurethane comprises a polyol having a molecular weight equal to about 2000 and hydroxyl number equal to about 56, and butanediol as crosslinker.

7. Drive belt according to one of the preceding claims, wherein the ratio between the height of said at least one rib and the thickness of said belt is comprised between 1:1.2 and 1:4.

8. Drive belt according to one of the preceding claims, wherein the pitch of successive ribs, as measured in a direction perpendicular to said main development direction, is comprised between 1 and 5 mm.

9. Drive belt according to one of the preceding claims, wherein said material has stress at 300% elongation (300% Modulus) comprised between 8.6 and 22 MPa.

10. Drive belt according to one of the preceding claims, wherein said material has tensile strength comprised between 17 and 32 MPa, and elongation at break comprised between 400% and 500%.

## Patentansprüche

1. Antriebsriemen mit einer Hauptentwicklungsrichtung, umfassend eine Vielzahl von Rippen, die im Wesentlichen parallel zu der Hauptentwicklungsrichtung angeordnet sind, wobei die Rippen eine Reihe von Spitzen und Senken bilden und der Riemen aus einem einzelnen Polymermaterial besteht, **dadurch gekennzeichnet, dass** keine Verstärkungselemente entlang seiner Hauptentwicklungsrichtung vorhanden sind, wobei das Polymermaterial aufweist:
- Härte von 50 bis 98 Sh A,
- Spannung bei 100% Dehnung (100% Modul) von 5 bis 14 MPa;
- Rückprallelastizität von 30% bis 70%.

2. Antriebsriemen gemäß Anspruch 1, wobei der Riemen vom endlosen Typ ist.

3. Antriebsriemen gemäß Anspruch 1 oder 2, wobei die Senken in der Schnittansicht durch wechselseitig geneigte Seiten definiert sind, die zu verschiedenen Rippen gehören.

4. Antriebsriemen gemäß Anspruch 1, 2 oder 3, wobei das Material ein Elastomer ist.

5. Antriebsriemen gemäß Anspruch 4, wobei das Material Polyurethan ist.

6. Antriebsriemen gemäß Anspruch 5, wobei das Polyurethan ein Polyol mit einem Molekulargewicht von etwa 2000 und eine Hydroxylzahl von etwa 56 und Butandiol als Vernetzer aufweist.

7. Antriebsriemen gemäß einem der vorhergehenden Ansprüche, wobei das Verhältnis zwischen der Höhe der mindestens einen Rippe und der Dicke des Riemens von 1:1,2 bis 1:4 liegt.

8. Antriebsriemen gemäß einem der vorhergehenden Ansprüche, bei dem die Steigung aufeinanderfolgender Rippen, gemessen in einer Richtung senkrecht zur Hauptentwicklungsrichtung, von 1 bis 5 mm liegt.

9. Antriebsriemen gemäß einem der vorhergehenden Ansprüche, wobei das Material eine Spannung bei 300% Dehnung (300% Modul) von 8,6 bis 22 MPa aufweist.

10. Antriebsriemen gemäß einem der vorhergehenden Ansprüche, wobei das Material eine Zugfestigkeit von 17 bis 32 MPa und eine Bruchdehnung von 400% bis 500% aufweist.

## Revendications

1. Courroie d'entraînement ayant une direction de développement principale, comprenant une pluralité de nervures agencées sensiblement parallèlement à ladite direction de développement principale, dans laquelle lesdites nervures font une série de pics et de creux, et ladite courroie est faite d'un matériau polymère unique, **caractérisée en ce que**,
il n'y a pas d'éléments de renforcement agencés le long de ladite direction de développement principale, ledit matériau polymère ayant :
- une dureté comprise entre 50 et 98 Sh A,
- une contrainte à l'allongement de 100 % (module de 100 %) comprise entre 5 et 14 MPa,
- une résilience de rebondissement comprise entre 30 % et 70 %.

2. Courroie d'entraînement selon la revendication 1, dans laquelle ladite courroie est du type sans fin.

3. Courroie d'entraînement selon la revendication 1 ou 2, dans laquelle lesdits creux sont définis, en vue en coupe, par des côtés inclinés en alternance appartenant à des nervures différentes.

4. Courroie d'entraînement selon la revendication 1, 2 ou 3, dans laquelle ledit matériau est un élastomère.

5. Courroie d'entraînement selon la revendication 4, dans laquelle ledit matériau est du polyuréthane.

6. Courroie d'entraînement selon la revendication 5, dans laquelle ledit polyuréthane comprend un polyol ayant une masse moléculaire égale à environ 2 000 et un indice d'hydroxyle égal à environ 56, et du butanediol en tant qu'agent de réticulation.

7. Courroie d'entraînement selon l'une des revendications précédentes, dans laquelle le rapport entre la hauteur de ladite au moins une nervure et l'épaisseur de ladite courroie est compris entre 1:1,2 et 1:4.

8. Courroie d'entraînement selon l'une des revendications précédentes, dans laquelle le pas de nervures successives, tel que mesuré dans une direction perpendiculaire à ladite direction de développement principale, est compris entre 1 et 5 mm.

9. Courroie d'entraînement selon l'une des revendications précédentes, dans laquelle ledit matériau a une contrainte à l'allongement de 300 % (module de 300 %) comprise entre 8,6 et 22 MPa.

10. Courroie d'entraînement selon l'une des revendications précédentes, dans laquelle ledit matériau a une résistance à la traction comprise entre 17 et 32 MPa, et un allongement à la rupture compris entre 400 % et 500 %.
